# FASCICULE DE BREVET EUROPEEN

(11) **EP 0 485 934 B1**
(45) Date de publication et mention de la délivrance du brevet: **09.07.1997**
(21) Numéro de dépôt: 91119195.5
(22) Date de dépôt: 11.11.1991
(51) Int. Cl.: G06F 9/44

(54) **Procédé de développement de logiciels**
Verfahren zur Entwicklung von Software
Software development procedure

(30) Priorité: 16.11.1990 FR 9014298
(43) Date de publication de la demande: 20.05.1992
(73) Titulaire: ALCATEL CIT, 75008 Paris (FR)
(72) Inventeur: Veillon, Albert, F-22700 Perros Guirec (FR)
(74) Mandataire: Weinmiller, Jürgen

(56) Documents cités:
- IEEE SOFTWARE vol. 4, no. 6, Novembre 1987, NEW YORK, US pages 28 - 35; D.B. LEBLANG ET AL.: 'Parallel software configuration management in a network environment'

## Description

L'invention concerne un procédé de développement de logiciels, en particulier de logiciels destinés à être exécutés par un micro-processeur, ce dernier étant appelé micro-processeur cible. Les logiciels de ce type sont développés au moyen d'outils logiciels appelés outils de développement, qui réalisent des fonctions de compilateur, éditeur de liens, etc. Ces outils logiciels sont fournis par le constructeur du micro-processeur cible, et sont prévus pour être exécutés sur un micro-ordinateur ou une station de travail fonctionnant généralement sous un système d'exploitation adapté à ce type de machine, par exemple ceux connus sous les marques MS-DOS, UNIX, SUN OS.

La puissance et l'espace mémoire d'un micro-ordinateur ou d'une station de travail sont bien adaptés au développement d'un logiciel de taille courante. Par contre, le développement de logiciels comportant plusieurs centaines de milliers d'instructions nécessite, en plus de l'utilisation d'outils de développement, l'utilisation d'outils de gestion de développement de logiciels, appelés aussi outils de base d'un atelier de génie logiciel. Ces outils de gestion sont par exemple : un gestionnaire de base de données, un gestionnaire d'objets, un gestionnaire de configuration, un contrôleur des accès et des opérations, un contrôleur des erreurs et des modifications. Ces outils de gestion sont conçus généralement pour être exécutés sur une machine centrale ayant la puissance, l'espace disque, et les logiciels nécessaires pour traiter plusieurs travaux quasi-simultanément. Cette machine centrale comporte aussi des logiciels de transfert de fichiers vers différentes stations de travail. Malheureusement, une machine centrale est mise en oeuvre au moyen d'un système d'exploitation qui n'est pas de même type que celui mis en oeuvre dans un simple micro-ordinateur ou une simple station de travail. Il n'est donc pas possible de faire collaborer directement un outil de développement fourni par le constructeur d'un microprocesseur cible, et un outil de gestion de développement, sur une machine centrale.

La solution classique à ce problème consiste à concevoir, pour chaque type de micro-processeur cible, de nouveaux outils de développement de logiciel, assurant les mêmes fonctions que ceux fournis par les constructeurs de microprocesseurs cibles, mais compatibles avec le système d'exploitation de la machine centrale qui exécutera ces outils de développement, en collaboration avec des outils de gestion de développement de logiciels. Par exemple, un compilateur est réécrit pour être opérationnel sur une machine centrale, alors que le logiciel résultant est destiné à être exécuté sur un micro-processeur cible. Cette solution a l'inconvénient d'être très coûteuse.

Le but de l'invention est de proposer un procédé beaucoup moins coûteux.

L'objet de l'invention est un procédé de développement de logiciels consistant à exécuter des outils de gestion de développement de logiciels, en collaboration avec des outils de développement de logiciels, caractérisé en ce qu'il consiste à :
- charger dans une machine centrale au moins un outil de gestion de développement de logiciels, supporté par un premier type de système d'exploitation;
- charger dans au moins une station de travail reliée à la machine centrale au moins un outil de développement supporté par un second type de système d'exploitation;
- lancer l'exécution d'un logiciel de gestion de développement, pour préparer un travail;
- lancer l'exécution d'un logiciel du système d'exploitation de la machine centrale, transférant ce travail de la machine centrale à une station, ce travail étant un fichier comportant des données et des commandes portant sur ces données;
- exécuter ce travail dans la station;
- transférer au moins un fichier résultant de l'exécution de ce travail, de la station à la machine centrale,
- lancer l'exécution d'un logiciel de gestion de développement, pour enregistrer ce fichier résultant.

L'invention sera mieux comprise et d'autres détails apparaîtront à l'aide de la description ci-dessous et des figures l'accompagnant :
- la figure 1 illustre schématiquement un exemple de mise en oeuvre du procédé selon l'art antérieur;
- la figure 2 illustre schématiquement un exemple de mise en oeuvre du procédé selon l'invention.

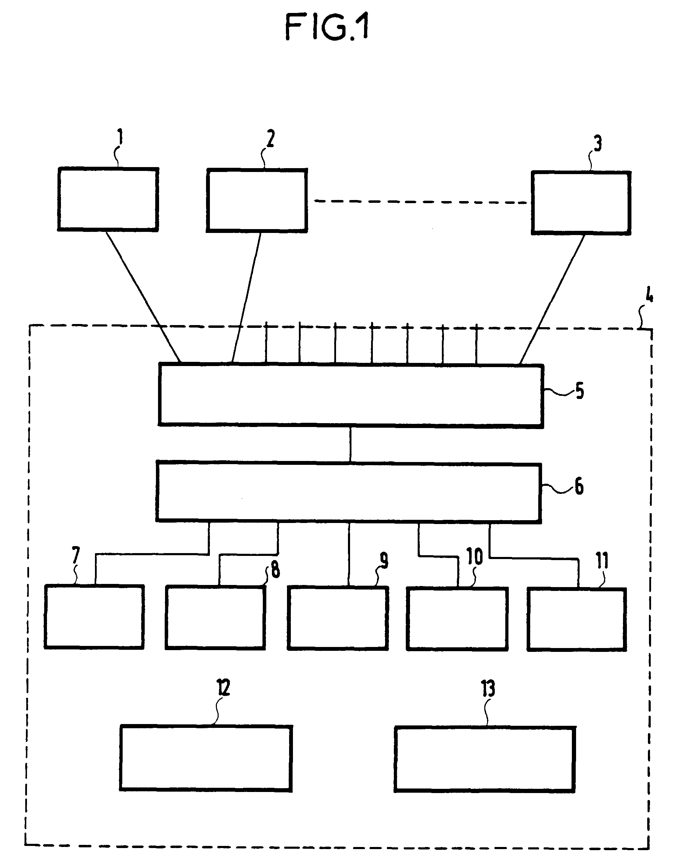

Dans l'exemple représenté sur la figure 1, une pluralité d'utilisateurs, développe en parallèle des logiciels qui seront exécutables sur un ou plusieurs types de micro-processeurs cibles, en travaillant sur des terminaux 1 à 3 reliés à une machine centrale 4. Les terminaux 1 à 3 sont des terminaux sans outils de développement de logiciels. Des outils de développement de logiciels, 13, sont mis en oeuvre dans la machine centrale 4 et collaborent avec des outils de gestion de développement, 12, exécutés aussi par la machine centrale 4. Ces outils 12 et 13 sont compatibles avec le système d'exploitation de la machine centrale 4. Les outils de développement fournis par les constructeurs des microprocesseurs cibles ont été réécrits spécialement pour être exécutables sur cette machine centrale 4.

Chaque utilisateur soumet son travail à un superviseur de traitement par lots local, 6, via une interface de traitement par lots, 5. Chaque travail met en oeuvre les outils 12 et 13. Chaque travail est constitué de données, et de commandes portant sur ces données. Par exemple, ces commandes lancent l'exécution d'un gestionnaire de configuration, faisant partie des outils de gestion, 12, et l'exécution d'un compilateur faisant partie des outils de développement, 13. Un gestionnaire de configuration a pour fonction de gérer des logiciels d'application, en prenant en compte : leurs noms, leurs types, leurs versions, leurs éditions, et leurs indices de fabrication. Il maintient des relations de dépendance entre des logiciels sources et des logiciels objets.

Par exemple, pour préparer un travail consistant à compiler un texte source, des commandes lancent l'exécution du gestionnaire de configuration pour que ce dernier envoie le texte source à compiler, d'un espace accessible à cet utilisateur, dans le gestionnaire de configuration, vers un fichier de travail utilisé comme fichier d'entrée source du compilateur. Le compilateur fournit un logiciel objet et un listing au gestionnaire de configuration. Une commande lance l'exécution du gestionnaire de configuration pour enregistrer ce logiciel objet et ce listing dans un espace situé dans le gestionnaire de configuration, et accessible à l'utilisateur.

Dans cet exemple, la machine centrale 4 peut exécuter cinq travaux quasi-simultanément. Cinq travaux sont répartis dans cinq zones de mémoire, appelées partitions, 7 à 11, permettant d'exécuter ces cinq travaux quasiment en parallèle, et les autres travaux sont mis dans une file d'attente non représentée. Les résultats de l'exécution de ces travaux sont stockés dans des espaces, situés dans le gestionnaire de configuration, et accessible par les utilisateurs. Quand un travail est achevé, le superviseur 6 va chercher un nouveau travail exécutable, dans la file d'attente.

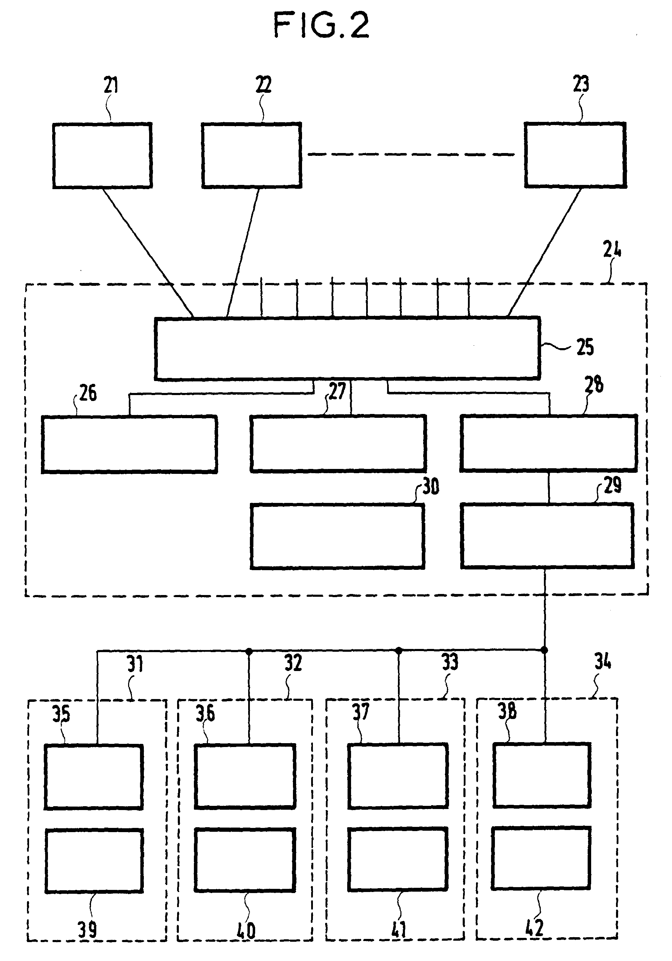

La figure 2 illustre schématiquement un exemple de mise en oeuvre du procédé selon l'invention. Une pluralité d'utilisateurs travaille sur des terminaux, 21 à 23, ne comportant pas d'outils de développement, et qui sont reliés à une machine centrale 24. La machine centrale 24 est reliée à des stations de travail, 31 à 34 comportant respectivement des logiciels de transfert de fichiers, 35 à 38, et comportant respectivement des outils de développement, 39 à 42, de type classique, fournis par les constructeurs de différents micro-processeurs cibles. Ces outils de développement 39 à 42 sont compatibles respectivement avec les systèmes d'exploitation des stations 31 à 34, qui sont par exemple des systèmes d'exploitation de marque MS-DOS, ou UNIX, ou SUN OS.

La machine centrale 24 comporte un système d'exploitation classique, par exemple de marque VM-CMS commercialisé par la société IBM, comportant notamment :
- une interface 25 de traitement par lots;
- un sous-système 26 superviseur de traitement par lots local, muni d'une file d'attente 27;
- un sous-système 29 de transfert de fichiers.

Ces logiciels sont les logiciels classiques d'une machine centrale, ils ne nécessitent aucune modification pour mettre en oeuvre le procédé selon l'invention.

Le système d'exploitation de la machine 24 comporte en outre un sous-système 28, superviseur des traitements par lot à distance. Ses fonctions et son architecture sont très proches de celles du sous-système 26.

La machine 24 comporte aussi des outils 30 de gestion de développement de logiciels. Ces outils 30 sont classiques et ont été conçus pour être exécutés sous le système d'exploitation de cette machine centrale 24. Ils comportent, par exemple, un gestionnaire de configuration.

Les utilisateurs voient les stations 31 à 34 comme un système de traitement par lots local.

Chaque utilisateur soumet son travail au superviseur 28 de traitement par lots à distance, via l'interface 25 de traitement par lots. Le superviseur 28 gère des classes de travaux, des priorités, et des files d'attente, non représentées; mais en plus il gère des classes de stations, pour sélectionner une station et lui transférer un travail, via le sous-système 29 de transfert de fichiers. Chaque travail est un fichier constitué de commandes et de données sur lesquelles ces commandes opèrent.

Certaines de ces commandes sont différentes de celles utilisées dans le cas précédent, car elles portent notamment sur le superviseur de traitement par lots à distance, 28, et sur le système d'exploitation d'une station, et sur le logiciel de transfert (31).

Chaque travail met en oeuvre les outils 30 dans la machine 24 et des outils 39, ou 40, ou 41, ou 42, dans l'une des stations 31 à 34. Chaque travail est composé de 3 sous-travaux :
- un premier sous-travail ST1 exécuté dans la machine centrale 24;
- un second sous-travail ST2 exécuté dans une station 31,...,34;
- un troisième sous-travail ST3, exécuté dans la machine centrale 24.

Par exemple, pour compiler un texte source, des commandes de ST1 lancent tout d'abord l'exécution d'un gestionnaire de configuration, faisant partie des outils de gestion, 30, dans la machine centrale 24, pour préparer le texte source à soumettre au compilateur.

Des commandes suivantes de ST1 préparent le sous-travail ST2. L'interface 25 envoie ST2 au superviseur 28. Ce dernier envoie ST2 à la station 31 par l'intermédiaire du sous-système 29 de transfert de fichiers, et du logiciel 35 de transfert de fichiers, de la station 31. Le sous-travail ST2 est composé du texte source à compiler et des commandes à exécuter dans la station 31.

La première commande du sous-travail ST2 sépare les commandes et le texte source. L'une de ces commandes lance l'exécution du compilateur faisant partie des outils de développement 39 de la station 31. Le sous-travail ST2 inclut des commande de retour des résultats à la machine centrale 24.

Enfin, une commande de ST3 lance l'exécution du gestionnaire de configuration pour enregistrer ces résultats dans l'espace accessible à l'utilisateur, dans le gestionnaire de configuration. Dans l'exemple d'une compilation, ces commandent provoquent l'envoi à la machine centrale de fichiers objets et d'un listing, résultant de la compilation d'un texte source, par l'intermédiaire du logiciel 35 de transfert de fichiers, du sous-système 29 de transfert de fichiers, du superviseur 28 de traitement par lots à distance.

La machine centrale 24 communique avec les stations 31 à 34 par le sous-système 29 de transfert de fichiers résidant dans la machine 24 et par les logiciels de transfert de fichier, 35 à 38, résidant dans les stations 31 à 34, et compatibles avec le sous-système 29 de transfert de fichiers. Les informations sont acheminées physiquement soit par des lignes spécialisées, soit par un réseau de transfert de données.

Lorsqu'une station a terminé le travail qu'elle avait en cours, le superviseur 28 lui transmet un nouveau travail. Quand une station 31 à 34, reçoit un tel travail, elle sépare les commandes et les données, puis exécute les commandes. Lorsque les commandes ont été exécutées, la station indique au superviseur 28 que le travail est achevé.

Une station ayant un système d'exploitation mono-tâche, par exemple MS DOS, ne traite qu'un travail à la fois; alors qu'une station ayant un système d'exploitation multi-tâches, par exemple UNIX, traite plusieurs travaux à la fois.

Le nombre de stations peut être quelconque. Les outils de développement, 39 à 42, peuvent être chargés dans les stations de différentes façons. Le chargement peut être refait pour chaque travail, en incluant au moins un outil de développement dans le fichier de travail transféré à une station par le superviseur 28. Le chargement peut avoir lieu une fois pour toutes, au moyen d'une disquette introduite dans un lecteur de la station; ou bien par téléchargement, au moyen du sous-système 29 de transfert de fichiers; ou bien, au moyen du superviseur 28 de traitement par lots à distance. Dans ce dernier cas, le superviseur 28 est informé du type d'outil de développement à télécharger dans chacune des stations 31 à 34 , au moment où l'utilisateur déclare la station au superviseur en lui indiquant : le type de système d'exploitation de la station, le type du micro-processeur cible concernant la station, et la classe des travaux que la station est autorisée à accepter. Le superviseur 28 en déduit les outils de développement qui sont à charger dans la station considérée.

En général, les utilisateurs développent parallèlement des logiciels pour différents types de micro-processeurs cibles, respectivement sur les différentes stations 31 à 34. Avant de lancer l'exécution d'un logiciel du sous-système 29 de transfert de fichiers, pour transférer un travail à une station, le superviseur 28 prend en compte la classe de ce travail, caractérisée par un outil de développement, et il la compare avec la classe de chaque station, pour sélectionner une station ayant une classe compatible avec la classe du travail. La classe d'une station est caractérisée par son système d'exploitation, un type de micro-processeur cible, et au moins un outil de développement de logiciels.

La portée de l'invention n'est pas limitée à l'exemple de mise en oeuvre décrit ci-dessus, de nombreuses variantes sont à la portée de l'homme de l'art, notamment en ce qui concerne le type des machines ou le type des systèmes d'exploitation, de ces machines.

## Revendications

1. Procédé de développement de logiciels consistant à exécuter des outils de gestion de développement de logiciels, en collaboration avec des outils de développement de logiciels, caractérisé en ce qu'il consiste à :
- charger dans une machine centrale (24) au moins un outil (30) de gestion de développement de logiciels, supporté par un premier type de système d'exploitation;
- charger dans au moins une station de travail (31) reliée à la machine centrale (24) au moins un outil de développement (39) supporté par un second type de système d'exploitation;
- lancer l'exécution d'un logiciel de gestion de développement (30), pour préparer un travail;
- lancer l'exécution d'un logiciel (29) du système d'exploitation de la machine centrale (24), transférant un travail de la machine centrale (24) à une station (31), ce travail étant un fichier comportant des données et des commandes portant sur ces données;
- exécuter ce travail dans la station (31);
- transférer au moins un fichier résultant de l'exécution de ce travail, de la station (31) à la machine centrale (24);
- lancer l'exécution d'un logiciel de gestion de développement (30), pour enregistrer ce fichier résultant.

2. Procédé selon la revendication 1, caractérisé en ce que, pour exécuter un travail, recevoir un travail suivant, et transférer un fichier résultant d'un travail précédent, quasi-simultanément dans une même station (31), il consiste à mettre en oeuvre, dans la station, un système d'exploitation multi-tâches.

3. Procédé selon la revendication 1, caractérisé en ce que, pour lancer l'exécution d'un logiciel transférant un fichier de travail de la machine centrale (24) à une station (31), en vue de développer des logiciels pour différents micro-processeurs cibles, il consiste à prendre en compte des classes de stations et des classes de travaux, chaque classe de stations étant caractérisée par un système d'exploitation, un type de micro-processeur cible, et au moins un outil de développement de logiciels; chaque classe de travaux étant caractérisée par un outil de développement de logiciels.

## Patentansprüche

1. Verfahren zur Software-Entwicklung, das darin besteht, Verwaltungshilfsmittel für die Entwicklung von Software zusammen mit Hilfsmitteln zur Entwicklung von Software einzusetzen, dadurch gekennzeichnet, daß es darin besteht:
- in eine zentrale Maschine (24) mindestens ein Verwaltungshilfsmittel (30) für die Entwicklung von Softwareprogrammen zu laden, das von einem Betriebssystem erster Art unterstützt wird,
- in mindestens eine Workstation (31), die mit der zentralen Maschine (24) verbunden ist, mindestens ein Entwicklungshilfsmittel (39) zu laden, das von einem Betriebssystem zweiter Art unterstützt wird,
- die Durchführung einer Entwicklungs-Verwaltungs-Software (30) zu starten, um eine Arbeit vorzubereiten,
- die Durchführung einer Software (29) des Betriebssystems der zentralen Maschine (24) zu starten, die diese Arbeit von der zentralen Maschine (24) zu einer Station (31) überträgt, wobei diese Arbeit eine Datei ist, die Daten und diese Daten betreffende Befehle enthält,
- diese Arbeit in der Station (31) durchzuführen,
- mindestens eine aus der Durchführung dieser Arbeit resultierende Datei von der Station (31) zur zentralen Maschine (24) zu übertragen,
- die Durchführung einer Entwicklungs-Verwaltungs-Software starten, um diese resultierende Datei zu speichern.

2. Verfahren nach Anspruch 1, dadurch gekennzeichnet, daß es für die Durchführung einer Arbeit, für den Empfang einer folgenden Arbeit und für die Übertragung einer aus einer vorhergehenden Arbeit resultierenden Datei darin besteht, in der Station ein Multitask-Betriebssystem zu verwenden.

3. Verfahren nach Anspruch 1, dadurch gekennzeichnet, daß für den Start einer Software, die eine Arbeitsdatei von der zentralen Maschine (24) zu einer Station (31) überträgt, um eine Software für verschiedene Ziel-Mikroprozessoren zu entwickeln, das Verfahren darin besteht, Klassen von Stationen und Klassen von Arbeiten zu berücksichtigen, wobei jede Klasse von Stationen durch ein Betriebssystem, eine Art von Ziel-Mikroprozessor und mindestens ein Software-Entwicklungshilfsmittel gekennzeichnet ist, während jede Klasse von Arbeiten durch ein Software-Entwicklungshilfsmittel gekennzeichnet ist.

## Claims

1. A software development method consisting in running tools for managing software development in co-operation with software development tools, the method being characterized in that it consists in:
loading at least one software development tool (30) supported by a first type of operating system into a mainframe computer (24);
loading at least one development tool (39) supported by a second type of operating system into at least one workstation (31) connected to the mainframe computer (24);
running software for managing development (30) to prepare a job;
running software (29) in the operating system of the mainframe computer (24) to transfer a job from the mainframe computer (24) to a workstation (31), said job being a file including data and commands relating to the data;
running the job in the workstation (31);
transferring at least one file resulting from running the job from the workstation (31) to the mainframe computer (24); and
running software for managing development (30) to record the resulting file.

2. A method according to claim 1, characterized in that in order to run a job, to receive a following job, and to transfer a file resulting from a preceding job quasi-simultaneously within the same workstation (31), the method consists in implementing a multitasking operating system in that workstation.

3. A method according to claim 1, characterized in that in order to run software for transferring a job file from the mainframe computer (24) to a workstation (31) for the purpose of developing software for different target microprocessors, the method consists in taking account of workstation classes and of job classes, with each workstation class being determined by an operating system, by a type of target microprocessor, and by at least one software development tool; and with each job class being determined by a software development tool.
